# EUROPEAN PATENT APPLICATION

(11) **EP 2 746 914 A2**
(43) Date of publication of application: **25.06.2014**
(21) Application number: 13198632.5
(22) Date of filing: 19.12.2013
(51) Int. Cl.: G06F 3/0481, G06F 9/44

(54) **Electronic device and method for editing windows**

(30) Priority: 20.12.2012 TW 101148551
(71) Applicant: Hon Hai Precision Industry Co., Ltd., New Taipei City (TW)
(72) Inventor: Lin, Chih-Yen, New Taipei (TW); Jeng, Shan-Chuan, New Taipei (TW); Yeh, Chien-Fa, New Taipei (TW); Lee, Chung-I, New Taipei (TW)
(74) Representative: Gray, John James

(57) **Abstract**

A display device (12) of an electronic device (1) displays a plurality of windows. When a user selects a window, the window is displayed above other windows (S30). When the user inputs an editing signal and the editing signal corresponds to an association instruction, the window is associated with the association instruction (S34). When the editing signal does not correspond to the association instruction or a canceling instruction, the window associated with the association instruction is edited according to the editing signal (S37).

## Description

### Field

Embodiments of the present disclosure relate to windows management technology, and more particularly to an electronic device and a method for editing windows.

### BackGround

A plurality of electronic devices include at least a display device. Many display device supports multiple windows. A window may cover other windows displayed on the display device. When a user wants to edit a window being covered by other windows, the user has to move the window and put the window above other windows, which is inconvenient and time-consuming.

### Summary

According to one aspect of the disclosure, an electronic device is provided. The electronic device includes a processor; and a computer program product that stores one or more programs, which comprise instructions which when executed by the processor of the electronic device, performs operations of: detecting whether an editing signal inputted by a user corresponds to instructions stored in the storage system when a window is selected, wherein the instruction comprises an association instruction and a canceling instruction; associating the association instruction to the selected window when the editing signal corresponds to the association instruction; canceling an association between a window and the association instruction when the editing signal corresponds to the canceling instruction; inputting the editing signal to the selected window when the editing signal does not correspond to the instructions and the association instruction has not been associated with the window; and inputting the editing signal to the window associated with the association instruction when the editing signal does not correspond to the instructions.

### BRIEF DESCRIPTION OF THE DRAWINGS

Embodiments of the invention are described, by way of example only, with reference to the accompanying drawings, in which:

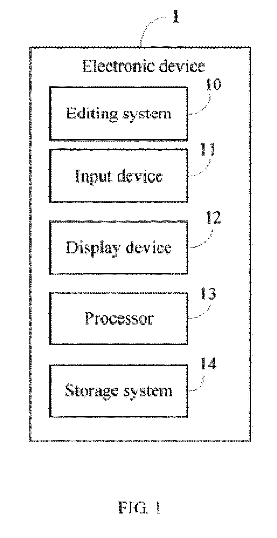

FIG. 1 is a block diagram of one embodiment of an electronic device including an editing system.
FIG. 2 is a block diagram of one embodiment of function modules of the editing system in FIG. 1.
FIG. 3 is a flowchart of one embodiment of a method for windows editing.

### DETAILED DESCRIPTION

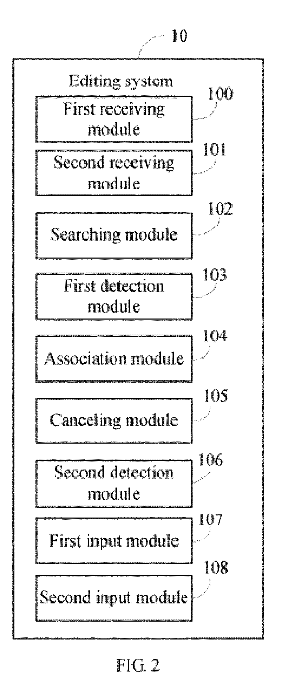

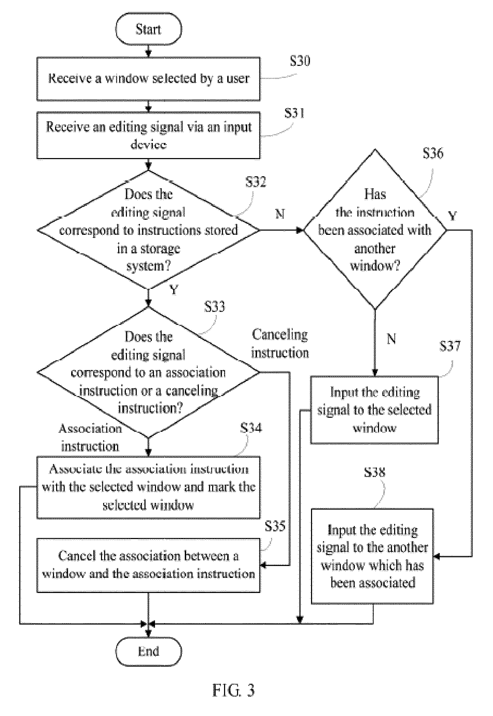

As shown in FIG. 2, the editing system 10 includes a plurality of function modules, such as a first receiving module 100, a second receiving module 101, a searching module 102, a first detection module 103, an association module 104, a canceling module 105, a second detection module 106, a first input module 107 and a second input module 108. The modules 100-108 include computerized code in the form of one or more programs that are stored in the storage system 14. The computerized code includes instructions that are executed by the processor 13, to provide functions of the editing system 10. Detailed functions of the modules 100-108 are given in reference to FIG. 3.

FIG. 3 is a flowchart of one embodiment of a method for editing windows. Depending on the embodiment, additional steps may be added, others removed, and the ordering of the steps may be changed.

In step S30, the first receiving module 100 receives a window selected by a user and displays the selected window on the display device 12. The window can be a text editing window, a webpage inputting window, or a program editing window, for example. When there are a plurality of windows opened by the user and the user selects a window, the selected window is displayed on the display device 12. The other windows are covered by the selected window.

In step S31, the second receiving module 101 receives an editing signal via the input device 11. For example, the editing signal may be activated by the user via the keyboard. The editing signal may be for editing text contents to a text window, or for typing a website address on a web page window.

In step S32, the searching module 102 detects whether the editing signal corresponds to the instructions stored in the storage system 14. When the editing signal corresponds to the instructions, step S33 is implemented. When the editing signal does not correspond to the instructions, step S36 is implemented.

In step S33, the first detection module 103 detects whether the editing signal corresponds to the association instruction or the canceling instruction. When the editing signal corresponds to the association instruction, step S34 is implemented. When the editing signal corresponds to the canceling instruction, step S35 is implemented.

In step S34, the association module 104 associates the association instruction to the selected window and marks the selected window. The association module 104 marks the association instruction to present that the association instruction has been associated with the selected window. Then the procedure ends.

In step S35, the canceling module 105 cancels the association between a window and the association instruction. The canceling module 105 also cancels the mark of the window. Then the procedure ends. The window may be the selected window or other windows which have been opened.

In step S36, the second detection module 106 detects whether the instruction stored in the storage system 14 has been associated with another window. When the instruction has not been associated with another window, step S37 is implemented. When the instruction has been associated with another window, step S38 is implemented.

In step S37, the first input module 107 inputs the editing signal to the selected window. For example, if the editing signal is for editing text, the first input module 107 inputs the edited text on the selected window. Then the procedure ends.

In step S38, the second input module 108 inputs the editing signal to the window associated with the instruction corresponding to the editing signal. For example, a window B is covered by a window A. When the user inputs an editing signal via the input device 11 and the window B is selected, contents corresponding to the editing signal are inputted to the window B.

It should be emphasized that the above-described embodiments of the present disclosure, particularly, any embodiments, are merely possible examples of implementations, merely set forth for a clear understanding of the principles of the disclosure. Many variations and modifications may be made to the above-described embodiment(s) of the disclosure without departing substantially from the spirit and principles of the disclosure. All such modifications and variations are intended to be included herein within the scope of this disclosure and the present disclosure and protected by the following claims.

## Claims

1. An electronic device, comprising:
a processor; and
a computer program product that stores one or more programs, which comprise instructions which when executed by the processor of the electronic device, performs operations of:
(a) detecting whether an editing signal inputted by a user corresponds to instructions stored in the storage system when a window is selected, wherein the instruction comprises an association instruction and a canceling instruction;
(b) associating the association instruction to the selected window when the editing signal corresponds to the association instruction;
(c) canceling an association between a window and the association instruction when the editing signal corresponds to the canceling instruction;
(d) inputting the editing signal to the selected window when the editing signal does not correspond to the instructions and the association instruction has not been associated with the window; and
(e) inputting the editing signal to the window associated with the association instruction when the editing signal does not correspond to the instructions.

2. The electronic device as claimed in claim 1, wherein operation (b) further comprises:
marking the selected window and the association instruction stored in the storage system.

3. The electronic device as claimed in claim 1 or 2, wherein operation (c) further comprises: canceling the mark of the window which has been marked.

4. The electronic device as claimed in claim 1, 2 or 3, wherein the selected window covers other windows displayed on a display device of the electronic device.

5. A method being executed by a processor of an electronic device, comprising steps:
(a) detecting whether an editing signal inputted by a user corresponds to instructions stored in the storage system when a window is selected, wherein the instruction comprises an association instruction and a canceling instruction;
(b) associating the association instruction to the selected window when the editing signal corresponds to the association instruction;
(c) canceling an association between a window and the association instruction when the editing signal corresponds to the canceling instruction;
(d) inputting the editing signal to the selected window when the editing signal does not correspond to the instructions and the association instruction has not been associated with the window; and
(e) inputting the editing signal to the window associated with the association instruction when the editing signal does not correspond to the instructions.

6. The method as claimed in claim 5, wherein operation (b) further comprises:
marking the selected window and the association instruction stored in the storage system.

7. The method as claimed in claim 5 or 6, wherein step (c) further comprises:
canceling the mark of the window which has been marked.

8. The method as claimed in claim 5, 6 or 7, wherein the selected window covers other windows displayed on a display device of the electronic device.

9. A computer program product having stored thereon instructions that, when executed by a processor of an electronic device, cause the processor to perform operations of:
(a) detecting whether an editing signal inputted by a user corresponds to instructions stored in the storage system when a window is selected, wherein the instruction comprises an association instruction and a canceling instruction;
(b) associating the association instruction to the selected window when the editing signal corresponds to the association instruction;
(c) canceling an association between a window and the association instruction when the editing signal corresponds to the canceling instruction;
(d) inputting the editing signal to the selected window when the editing signal does not correspond to the instructions and the association instruction has not been associated with the window; and
(e) inputting the editing signal to the window associated with the association instruction when the editing signal does not correspond to the instructions.

10. The computer program product as claimed in claim 9, wherein operation (b) further comprises:
marking the selected window and the association instruction stored in the storage system.

11. The computer program product as claimed in claim 9 or 10, wherein operation (c) further comprises:
canceling the mark of the window which has been marked.

12. The computer program product as claimed in claim 9, 10 or 11, wherein the selected window covers other windows displayed on a display device of the electronic device.
